(19) Europäisches Patentamt
European Patent Office
Office européen des brevets

(11) **EP 2 683 458 B1**

(12) **FASCICULE DE BREVET EUROPEEN**

(45) Date de publication et mention
de la délivrance du brevet:
**01.08.2018 Bulletin 2018/31**

(21) Numéro de dépôt: **12708907.6**

(22) Date de dépôt: **10.02.2012**

(51) Int Cl.:
***B01D 19/00*** *(2006.01)*

(86) Numéro de dépôt international:
**PCT/FR2012/050302**

(87) Numéro de publication internationale:
**WO 2012/120211 (13.09.2012 Gazette 2012/37)**

(54) **SÉPARATEUR À ÉCOULEMENT CYCLONIQUE**

ZYKLONSTROMABSCHEIDER

CYCLONIC FLOW SEPARATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2011 FR 1151854**

(43) Date de publication de la demande:
**15.01.2014 Bulletin 2014/03**

(73) Titulaire: **Total SA**
**92400 Courbevoie (FR)**

(72) Inventeurs:
• **MARTY, Jacques**
**F-64000 Pau (FR)**
• **LECOFFRE, Yves**
**F-38000 Grenoble (FR)**
• **MAJ, Guillaume**
**F-38700 La Tronche (FR)**

(74) Mandataire: **Cabinet Plasseraud**
**66, rue de la Chaussée d'Antin**
**75440 Paris Cedex 09 (FR)**

(56) Documents cités:
EP-A1- 1 600 215    WO-A1-01/36561
GB-A- 2 439 528    US-A- 3 807 142
US-A- 4 443 331

EP 2 683 458 B1

## Description

La présente invention concerne un séparateur à écoulement cyclonique pour séparer des composants d'un milieu fluide, et notamment pour séparer des phases d'un mélange de liquide et de gaz.

Le document WO-01/00296 décrit un exemple d'un dispositif de séparation comprenant un premier séparateur comprenant en série dans une direction longitudinale de l'écoulement, une entrée de mélange d'un liquide et d'un gaz, un lanceur pour entrainer en rotation ledit mélange, une chambre de séparation et une sortie de liquide. Par un effet cyclonique, une phase gazeuse du mélange se concentre au centre de la chambre de séparation sous la forme d'un cylindre de gaz, entouré par une phase liquide. Ce séparateur comprend une sortie de gaz au centre de la chambre de séparation, pour extraire le gaz.

Cependant du liquide est entrainé vers la zone centrale, et le gaz extrait comprend encore une fraction de liquide.

Pour améliorer la séparation, le dispositif de séparation du document WO-01/00296 comprend alors un deuxième séparateur de type gravitaire, alimenté par la sortie de gaz du premier séparateur.

Un tel dispositif de séparation est alors encombrant et coûteux.

Le document GB 2 439 528 concerne un système de séparation de fluide multi-phase. Les particules solides sont récupérées par gravité dans une chambre à boue dans une zone inférieure, et les phases gaz-liquide sont séparées dans la chambre de séparation centrale.

Le document US 3 807 142 décrit un dispositif pour enlever du gaz et des particules dans un fluide. Le dispositif comprend une zone de séparation qui centrifuge des particules de haute densité.

La présente invention a pour but d'éviter l'utilisation de deux séparateurs, et de réduire l'encombrement du dispositif.

Plus particulièrement, l'invention concerne un séparateur d'un mélange de liquide et de gaz, comprenant un dispositif d'injection, une chambre de séparation ayant une surface interne sensiblement cylindrique et s'étendant selon un axe longitudinal vertical, et une chambre de contrôle, dans lequel :

- le dispositif d'injection est alimenté par le mélange de liquide et de gaz, et injecte le mélange dans la chambre de séparation, de manière sensiblement tangentielle à la surface interne, de telle sorte que le mélange est séparé dans la chambre de séparation en du gaz situé dans un volume central et du liquide situé dans un volume annulaire autour du volume central, une surface d'interface séparant lesdits volumes central et annulaire,
- la chambre de séparation s'étend vers le bas entre une paroi amont à proximité du dispositif d'injection et une paroi aval à l'opposé de la paroi amont, et comprend une première sortie axiale pour extraire le gaz du volume central, une deuxième sortie à distance dudit axe pour extraire le liquide du volume annulaire, et une troisième sortie axiale en communication avec la chambre de contrôle, ladite troisième sortie située dans la paroi aval et ayant un diamètre supérieur au diamètre de la première sortie et inférieur à un diamètre interne de la deuxième sortie,

- la chambre de contrôle est dans le prolongement de la chambre de séparation et reçoit par la troisième sortie de la chambre de séparation une quantité de liquide qui s'écoule depuis la chambre de séparation pour former un volume de liquide ayant une surface supérieure, et est reliée au dispositif d'injection par un circuit de retour pour réinjecter une quantité de liquide de ladite chambre de contrôle vers le dispositif d'injection, et

- un moyen de régulation comprenant une pompe et adapté pour réguler un niveau de la surface supérieure dans la chambre de contrôle en réinjectant la quantité de liquide par le circuit de retour vers le dispositif d'injection, et de telle sorte que ladite surface d'interface ait en condition normale de fonctionnement un diamètre compris entre le diamètre de la première sortie et le diamètre de la troisième sortie pour que ladite surface d'interface pénètre dans la chambre de contrôle et que du liquide de la chambre de séparation s'écoule vers ladite chambre de contrôle.

Grâce à ces dispositions, la séparation du liquide du gaz est très performante : le gaz extrait par la première sortie axiale ne contient que très peu de liquide, et le liquide extrait par la sortie annulaire ne contient que très peu de gaz.

En outre, la surface d'interface entre le liquide et le gaz dans la chambre de séparation a une forme sensiblement cylindrique très stable. Le diamètre de cette surface d'interface varie peu, même lorsque les conditions d'alimentation du séparateur varient.

Dans divers modes de réalisation du séparateur d'un mélange de liquide et de gaz selon l'invention, on peut éventuellement avoir recours en outre à l'une et/ou à l'autre des dispositions suivantes :

- la première sortie est formée d'un tube s'étendant le long de l'axe dans le volume central, ledit tube comprenant des ouvertures latérales pour extraire le gaz dudit volume central ;
- la deuxième sortie est une ouverture annulaire ayant un diamètre externe inférieur au diamètre de la surface interne de la chambre de séparation ;
- le volume de la chambre de contrôle est inférieur au volume de la chambre de séparation, et de préférence compris entre 10 % et 50 % du volume de la chambre de séparation ;
- la chambre de contrôle comprend au moins une partie annulaire de son volume située autour de la chambre de séparation ;

- la chambre de contrôle comprend une première partie dans laquelle la surface d'interface pénètre, une deuxième partie annulaire située en dessous de la première partie et autour de la chambre de séparation, et des tubes reliant lesdites première et deuxième parties pour amener par gravité le liquide de la première partie vers la deuxième partie de la chambre de contrôle, ledit liquide étant extrait de cette deuxième partie de la chambre de contrôle pour être réinjecté vers le dispositif d'injection ;
- le séparateur comprend en outre un réservoir relié à la chambre de contrôle par une canalisation d'aller pour extraire du liquide de la chambre de contrôle vers le réservoir, et une canalisation de retour pour extraire du liquide du réservoir vers la chambre de contrôle ;
- la chambre de contrôle comprend au moins un capteur de chambre de contrôle pour mesurer un niveau de liquide dans ladite chambre de contrôle, et comprend en outre une première unité de contrôle pilotant une pompe et une vanne situées dans les canalisations d'aller et de retour, la première unité de contrôle étant adaptée à contrôler le niveau de liquide dans la chambre de contrôle;
- le réservoir comprend au moins un capteur de réservoir pour mesurer un niveau de liquide dans ledit réservoir, et comprend en outre une deuxième unité de contrôle pilotant une pompe pour alimenter le réservoir en liquide et une vanne pour rejeter du liquide du réservoir, ladite deuxième unité de contrôle étant adaptée à contrôler ledit niveau de liquide dans le réservoir ;
- la chambre de contrôle comprend des éléments de guidage du liquide destinés à réduire une rotation autour de l'axe longitudinal du liquide provenant de la chambre de séparation ;
- la chambre de séparation s'étend vers le bas entre une paroi amont à proximité du dispositif d'injection et une paroi aval à l'opposé de la paroi amont, et la première sortie est située dans la paroi amont, et les deuxième et troisième sorties sont situées dans la paroi aval ;
- la chambre de séparation s'étend vers le haut entre une paroi amont à proximité du dispositif d'injection et une paroi aval à l'opposé de la paroi amont, et les première, deuxième et troisième sorties sont situées dans la paroi aval.

D'autres caractéristiques et avantages de l'invention apparaîtront au cours de la description suivante de cinq de ses modes de réalisation, donnés à titre d'exemples non limitatifs, en regard des dessins joints.
Sur les dessins :

- la figure 1 est une vue schématique en coupe longitudinale d'un premier mode de réalisation d'un séparateur du type de l'invention,
- la figure 2 est une vue en coupe selon la ligne II-II du dispositif d'injection du séparateur de la figure 1,
- la figure 3 est une vue en coupe d'une variante du dispositif d'injection du séparateur de la figure 1,
- la figure 4 est une vue agrandie de la deuxième extrémité de la chambre de séparation et de la chambre de contrôle du séparateur de la figure 1,
- la figure 5 est une vue schématique en coupe longitudinale d'un deuxième mode de réalisation d'un séparateur du type de l'invention,
- la figure 6 est une vue schématique en coupe longitudinale d'un troisième mode de réalisation d'un séparateur du type de l'invention,
- la figure 7 est une vue schématique en coupe longitudinale d'un quatrième mode de réalisation d'un séparateur du type de l'invention,
- la figure 8 est une vue schématique en coupe longitudinale d'un cinquième mode de réalisation d'un séparateur du type de l'invention.

Sur les figures, le séparateur 10 s'étend dans une direction d'axe D, correspondant à la direction générale de l'écoulement dans celui-ci entre l'amont et aval.
Une direction latérale ou transversale mentionnée dans cette description doit s'entendre comme la direction X ou Y désignée sur les figures. Ces directions latérale ou transversale ne sont mentionnées que pour aider la lecture et la compréhension de l'invention. La direction Z correspond à une direction verticale vers le haut, c'est-à-dire à l'opposé d'une force de gravité s'exerçant vers le bas. Comme cela est usuel, un élément sera désigné « au dessus » d'un autre lorsque celui-ci est positionné dans la direction Z par rapport à l'autre, et il sera désigné « en dessous » d'un autre dans le cas inverse. La direction D est verticale. Elle est soit égale à la direction Z soit opposée à celle-ci.
Sur les différentes figures, les mêmes références désignent des éléments identiques ou similaires.

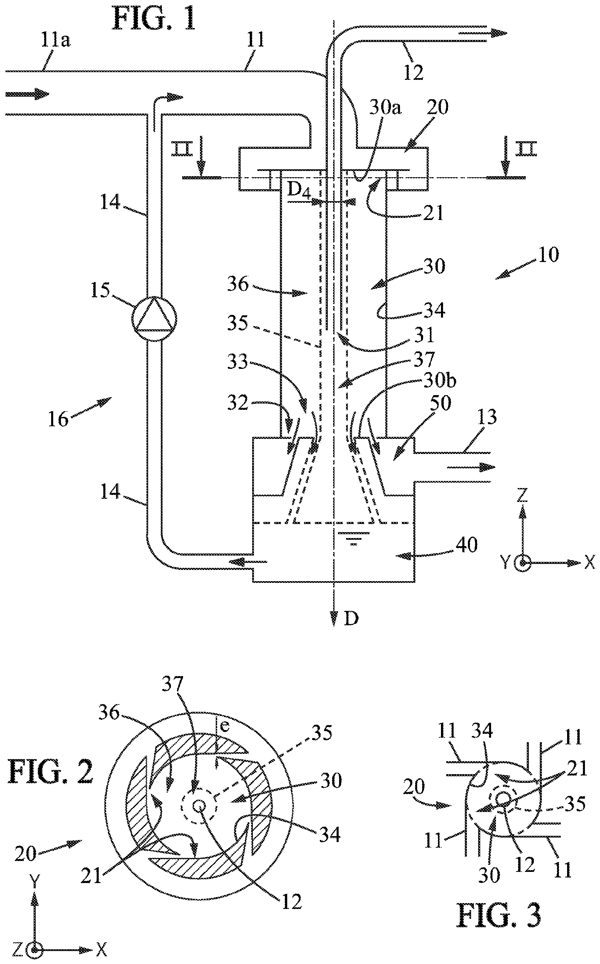

La **figure 1** est une vue schématique, en coupe longitudinale, d'un premier mode de réalisation d'un séparateur 10 d'un mélange de liquide et de gaz selon l'invention.
Le mélange considéré comprend par exemple de très fines bulles de gaz dispersées dans un liquide. Ces bulles ont par exemple un diamètre inférieur à 200 pm, et souvent inférieur à 100 pm.
Le liquide peut être de l'eau, de l'huile ou tout hydrocarbure sous forme liquide.
Le gaz peut être un hydrocarbure en phase gazeuse, du gaz naturel, ou tout autre gaz.
Le mélange en entrée du séparateur peut comprendre une fraction volumique de gaz très variable, et par exemple comprise entre 5 % et 25 %. Le gaz séparé en sortie du séparateur ne doit pas comprendre de liquide, ou de manière très faible. Notamment, le gaz séparé contient moins de 0,5 % de liquide en volume, et de préférence moins de 0,05 %, et de manière encore plus préférée moins de 0,01 %. Le séparateur 10 selon l'invention permet selon des dimensionnement optimisés de telles performances de séparation. Le liquide séparé en sortie du séparateur ne doit pas comprendre de gaz, ou dans une fraction volumique inférieure à 2 %. Ceci correspond donc à une qualité de séparation très bonne. En outre, les débits de mélange peuvent être très importants, de l'ordre de 200 litres/secondes (700 m$^3$/h). Il est par conséquent, très difficile de construire un tel séparateur liquide-gaz.

Le séparateur 10 a une forme générale d'un cylindre, et a par exemple un diamètre extérieur inférieur à 500 mm.

Le séparateur 10 comprend :

- une canalisation d'alimentation 11 pour l'alimenter avec un mélange de liquide et de gaz,
- une première canalisation de sortie 12 pour extraire le gaz séparé du mélange, et
- une deuxième canalisation de sortie 13 pour extraire le liquide séparé du mélange.

Ce séparateur 10 comprend en outre dans une direction longitudinale d'axe D correspondant au sens de l'écoulement du mélange dans le séparateur :

- un dispositif d'injection ou lanceur 20,
- une chambre de séparation 30 dans le prolongement du lanceur 20, et
- une chambre de contrôle 40 dans le prolongement de la chambre de séparation 30.

Le dispositif d'injection 20 est connecté en amont à la canalisation d'alimentation 11 pour être alimenté avec le mélange.

Selon une première variante présentée en **figures 1 et 2,** le dispositif d'injection 20 est habituellement dénommé « lanceur ». Ce dispositif d'injection 20 comprend une pluralité de canaux, et de préférence quatre canaux, débouchant en aval par des ouvertures 21 dans la chambre de séparation 30 et de manière sensiblement tangentielle à une surface interne 34 cylindrique d'axe D de cette chambre de séparation.

Selon une deuxième variante présentée en **figure 3,** le dispositif d'injection 20 comprend une ou plusieurs conduites, séparées, débouchant par des ouvertures 21 dans la chambre de séparation 30, également de manière sensiblement tangentielle à la surface interne 34 cylindrique de la chambre de séparation 30.

Les canaux, conduites et ouvertures du dispositif d'injection 20, cités ci-dessus, sont de section transversale circulaire ou rectangulaire, et préférentiellement toutes identiques.

Le mélange est avantageusement injecté par le dispositif d'injection 20 dans la chambre de séparation 30 avec une vitesse élevée pour former un écoulement cyclonique dans la chambre de séparation 30, mais inférieure à une limite prédéterminée pour éviter d'obtenir un écoulement trop perturbé qui fractionnerait les bulles de gaz, ce qui nuirait à la séparation. La vitesse d'injection dans la chambre de séparation 30 est ainsi, par exemple comprise entre 5 et 20 m/s, et de préférence comprise entre 10 et 15 m/s.

La chambre de séparation 30 a une surface interne 34 sensiblement cylindrique de diamètre noté $D_0$, s'étendant selon l'axe longitudinal D entre une paroi amont 30a et une paroi aval 30b. Elle comprend en amont des ouvertures 21 amenant le mélange tangentiellement dudit lanceur 20 à ladite surface interne 34 de la chambre de séparation.

Grâce à l'écoulement du mélange dans le séparateur et grâce à l'alimentation tangentielle de la chambre de séparation 30 par les canaux, le lanceur 20 force le mélange de liquide et de gaz à être en rotation autour de l'axe D dès son entrée dans la chambre de séparation 30.

Le mélange en rotation a alors dans la chambre de séparation 30 un régime d'écoulement cyclonique, qui est particulièrement efficace pour la séparation des composants ou phases d'un mélange, ayant des densités différentes les unes des autres. Les phases les plus denses se concentrent à une position radiale plus éloignée du centre (de l'axe D) que les phases les moins denses. Dans un écoulement cyclonique idéal, la vitesse tangentielle des composants du mélange croît selon une loi hyperbolique depuis la périphérie de la chambre de séparation jusqu'à un rayon où elle atteint une valeur maximale, puis diminue entre ce rayon et le centre de la chambre de séparation selon une loi linéaire. Elle est en particulier nulle au centre de la chambre de séparation. Ceci soumet le mélange à des accélérations radiales inversement proportionnelles au cube du rayon dans la zone hyperbolique.

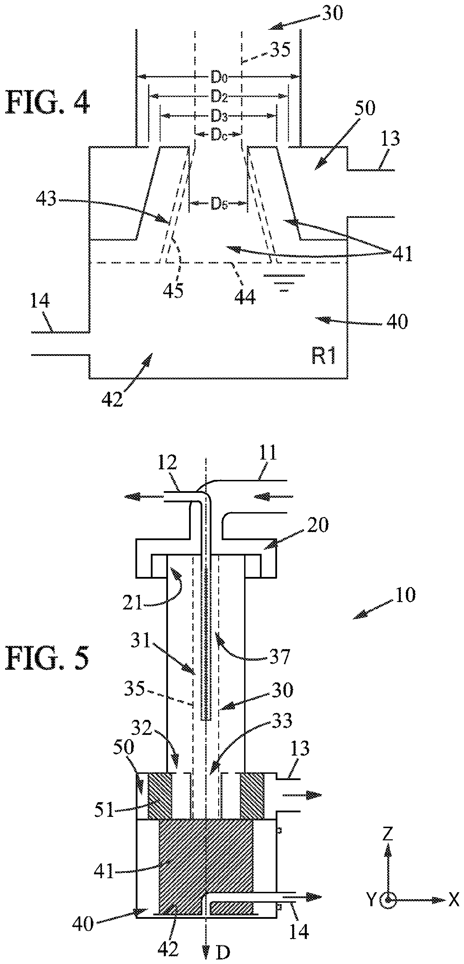

Grâce à cet écoulement en régime cyclonique dans la chambre de séparation 30, le mélange de liquide et de gaz est progressivement séparé à mesure qu'il se rapproche de la paroi aval 30b, en une phase essentiellement liquide éloignée de l'axe D et s'étendant dans un volume annulaire 36 autour de l'axe D, et une phase gazeuse au proche de l'axe D et s'étendant dans un volume central 37 sensiblement cylindrique entouré par le volume annulaire 36. Une surface d'interface 35 sensiblement cylindrique dans la direction longitudinale de l'axe D sépare la phase gazeuse au centre du mélange en périphérie, le mélange se purifiant de l'amont vers l'aval, en s'appauvrissant en gaz. Cette surface d'interface 35 cylindrique a un diamètre noté $D_c$ en **figure 4.** Les surfaces d'interfaces séparant la phase liquide de la phase de gaz sont représentées sur les figures en pointillé.

La chambre de séparation 30 comprend :

- une première sortie 31 axiale, pour extraire le gaz concentré dans le volume central 37 autour de l'axe D,
- une deuxième sortie 32 à distance de l'axe D pour extraire le liquide concentré dans le volume annulaire 36, et
- une troisième sortie 33 axiale.

La première sortie 31 axiale est formée d'un tube s'étendant selon l'axe X et ayant un diamètre noté $D_4$. Cette première sortie 31 est connectée à la première canalisation de sortie 12 pour extraire le gaz du séparateur 10.

En **figure 1,** cette première sortie 31 est positionnée en amont de la chambre de séparation 30, c'est-à-dire à proximité du lanceur 20.

La deuxième sortie 32 est placée à une extrémité aval de la chambre de séparation 30.

Cette deuxième sortie 32 est par exemple connectée à une chambre d'extraction 50 comme représentée sur les figures, pour extraire le liquide du séparateur 10 par la deuxième canalisation de sortie 13.

La deuxième sortie 32 est une ouverture ou fente annulaire formée à l'extrémité aval de la chambre de séparation 30. Elle s'étend entre un diamètre interne noté $D_3$ et un diamètre externe noté $D_2$, tel que représenté en **figure 4.**

Le diamètre externe $D_2$ de cette deuxième sortie 32 est inférieur au diamètre $D_0$ de la surface interne 34 de la chambre de séparation 30. Le mélange contenu dans la chambre de séparation est ainsi forcé à se déplacer vers le centre du séparateur, à une position radiale de l'axe D où la vitesse tangentielle est plus importante. Pour une même vitesse d'injection de mélange dans la chambre de séparation 30, le gaz est mieux séparé du liquide et des bulles de plus petites dimensions peuvent être séparées du liquide.

La troisième sortie 33 axiale est formée d'un trou circulaire dans la paroi de l'extrémité aval de la chambre de séparation 30. Cette troisième sortie 33 est en communication vers la chambre de contrôle 40 située dans le prolongement en dessous de la chambre de séparation 30 selon la direction de l'axe D. Cette troisième sortie 33 a un diamètre noté $D_5$, qui est inférieur au diamètre interne $D_3$ de la deuxième sortie 32.

Le volume central 37 de gaz se prolonge dans la chambre de contrôle par le volume noté 41.

En fonctionnement normal, le diamètre $D_5$ de la troisième sortie 33 est supérieur au diamètre $D_c$ de la surface d'interface 35. Ainsi, la surface d'interface 35 pénètre ou se prolonge dans la chambre de contrôle 40 par une surface 45, qui par exemple a tendance à s'évaser dans la direction de l'axe D vers l'intérieur de la chambre de contrôle, du fait de la composante centrifuge de la vitesse d'un élément de fluide.

Grâce à cette caractéristique, une première quantité de liquide de la chambre de séparation à proximité de la surface d'interface 35 s'écoule de manière continue vers la chambre de contrôle 40 sous la forme d'une nappe liquide de section annulaire, s'évasant dans la direction de l'axe D, dénotée par la référence 43, et s'étendant jusqu'à une surface supérieure 44 correspondant à un niveau moyen de remplissage d'un volume de contrôle 42 de cette chambre de contrôle 40, par le liquide déversé depuis la chambre de séparation 30.

Le mélange ou liquide s'écoulant de la chambre de séparation 30 vers la chambre de contrôle 40 est déjà très fortement séparé, de sorte que l'on peut considérer que ce mélange est essentiellement du liquide.

En outre, il faut noter que cette chambre de contrôle 40 et cet écoulement ou déversement a principalement pour effet de stabiliser la surface d'interface 35, et non de réaliser une deuxième séparation gravitaire. Notamment, le volume de cette chambre de contrôle 40 et les débits ne permettraient pas une telle séparation gravitaire efficace.

Un déversement continu de mélange ou liquide de la chambre de séparation 30 vers la chambre de contrôle 40 est ainsi assuré, ce déversement permettant de maintenir constant et stable le diamètre $D_c$ de la surface d'interface 35, et permettant de garantir que le diamètre $D_c$ de la surface d'interface 35 est inférieur au diamètre $D_5$ de la troisième sortie 33.

Ce diamètre $D_c$ est par conséquent inférieur au diamètre interne $D_3$ de la deuxième sortie 32.

En conséquence, le gaz préalablement séparé par effet cyclonique et collecté dans le volume central 37 ne risque pas d'être entraîné vers la deuxième sortie 32 de liquide.

Réciproquement, le diamètre $D_5$ de la troisième sortie 33 est supérieur au diamètre $D_4$ de la première sortie 31, et il est supérieur au diamètre $D_c$ de la surface d'interface. Le diamètre $D_c$ de la surface d'interface 35 est compris entre le diamètre $D_4$ de la première sortie 31 et le diamètre $D_5$ de la troisième sortie.

Le liquide du volume annulaire 36 ne risque pas d'être entraîné dans la première sortie 31 de gaz.

La chambre de contrôle 40 est alors connectée à la canalisation d'alimentation 11 par un circuit de retour 16 comprenant au moins une canalisation de retour 14, et éventuellement une pompe 15 et/ou une vanne. La canalisation d'alimentation 11 comprend alors une première portion 11a en amont de cette connexion. Le séparateur est alimenté par cette première portion 11a en un débit d'alimentation de mélange. Au niveau de la connexion de la canalisation de retour 14, un débit de retour en liquide provenant de la chambre de contrôle 40 est ajouté au débit d'alimentation dans ladite canalisation d'alimentation 11.

Le liquide ou mélange de liquide et de gaz de la chambre de contrôle 40 est ainsi réinjecté vers le lanceur 20 pour être à nouveau séparé.

Cette chambre de contrôle 40 n'est pas un deuxième séparateur de type gravitaire, puisque son contenu est réinjecté vers la canalisation d'alimentation 11 en amont.

Le volume de la chambre de contrôle 40 peut être faible, notamment il peut être inférieur au volume de la chambre de séparation 30. De préférence, il est compris entre 10 % et 50 % du volume de la chambre de séparation 30. Le volume de la chambre de contrôle 40 doit pouvoir contenir suffisamment de mélange liquide pour qu'en fonctionnement normal la pompe 15 du circuit de retour 16 injecte un débit continu de mélange vers la première canalisation 11. Le séparateur 10 doit alors être mis en route en remplissant partiellement la chambre de contrôle 40.

Grâce à cette disposition, le volume de cette chambre de contrôle 40 est très réduit et peut être intégré dans un même corps que la chambre de séparation 30 du séparateur 10.

Le fonctionnement normal, est un fonctionnement du séparateur 10 dans lequel le diamètre $D_c$ de la surface d'interface est compris entre le diamètre $D_4$ de la première sortie 31 et le diamètre $D_5$ de la troisième sortie 33, c'est-à-dire :

$$D_4 \;<\; D_c \;<\; D_5.$$

En outre, pour un tel séparateur 10 comprenant une chambre de contrôle 40 dans laquelle du liquide de la chambre de séparation 30 se déverse, la position radiale de la surface d'interface 35 est très stable. Le volume de gaz et de liquide de la chambre de contrôle 40 agit comme un amortisseur des variations du diamètre $D_c$ de la surface d'interface 35, notamment lorsque les conditions d'alimentation varient en terme de débit ou de pression.

Si le diamètre $D_c$ de la surface d'interface 35 diminue lorsque le débit de mélange injecté dans la chambre de séparation 30augmente, un débit de mélange ou liquide déversé dans la chambre de contrôle 40 augmente du fait de l'augmentation de la section de déversement entre le diamètre $D_5$ de la troisième sortie 33 et le diamètre $D_c$ de la surface d'interface 35. Dans un fonctionnement en circuit fermé, dans lequel la pompe 15 réinjecte un débit constant en amont, l'augmentation du débit déversé augmente le volume de liquide contenu dans la chambre de contrôle 40 et diminue le volume de liquide contenu dans la chambre de séparation 30. Le débit de déversement du mélange vers la chambre de contrôle 40 a alors pour effet d'augmenter le diamètre $D_c$ de la surface d'interface 35, donc un effet s'opposant à sa cause.

Si au contraire le diamètre $D_c$ de la surface d'interface 35 augmente parce que le débit de mélange injecté dans la chambre de séparation 30 diminue, le débit de liquide ou mélange déversé dans la chambre de contrôle 40 est diminué, ce qui se traduit par une diminution du volume de liquide contenu dans la chambre de contrôle 40 et une augmentation du volume de liquide contenu dans la chambre de séparation 30. Ainsi, le diamètre $D_c$ de la surface d'interface 35 diminue.

Le diamètre $D_c$ de la surface d'interface 35 est ainsi très stable. Le séparateur 10 n'a pas besoin d'une régulation rapide pour contrôler le diamètre $D_c$ de la surface d'interface 35 Il suffit alors de mettre en oeuvre une régulation du niveau de liquide contenu dans la chambre de contrôle. Grâce au volume de la chambre de contrôle, le séparateur selon l'invention peut avoir un temps de réponse plus grand que le temps caractéristique de variations de débit ou de pression en alimentation.

Le diamètre $D_c$ de la surface d'interface 35 a une valeur stable supérieure au diamètre $D_4$ de la première sortie 31. La première sortie 31 n'entraîne pas de liquide et le gaz extrait est très bien séparé du liquide.

En fonctionnement normal, le diamètre $D_c$ de la surface d'interface 35 a une valeur stable inférieure au diamètre $D_5$ de la troisième sortie 33 et donc inférieure au diamètre interne $D_3$ de la deuxième sortie 32. La deuxième sortie 32 n'entraîne pas de gaz préalablement séparé et le liquide extrait est très bien séparé du gaz. Il ne contient que de fines bulles résiduelles n'ayant pas pu être séparées par l'écoulement cyclonique.

Grâce à ces dispositions, le gaz et le liquide sont très bien séparés en un seul dispositif de séparation, qui de plus est simple à contrôler, sans nécessiter la mise en oeuvre d'une boucle d'asservissement rapide.

En outre, pour un tel séparateur 10 comprenant une chambre de contrôle 40 dans laquelle du liquide de la chambre de séparation 30 se déverse en continu, l'écoulement dans la chambre de séparation a une caractéristique cyclonique entre la surface interne 34 de cette chambre de séparation (diamètre $D_0$) et la deuxième sortie (diamètre interne $D_3$), mais il tend également à conserver cette caractéristique cyclonique jusqu'à la troisième sortie (diamètre $D_5$), voire jusqu'au diamètre $D_c$ de la surface d'interface 35.

Grâce à cet effet, les vitesses tangentielles dans le mélange à une position radiale proche du diamètre $D_5$ de la troisième sortie sont importantes. Ceci a pour effets, d'une part de stabiliser la surface d'interface 35, et d'autre part d'augmenter la quantité de bulles de gaz séparées dans la chambre de séparation 30. Le séparateur selon l'invention est ainsi très efficace.

La **figure 5** montre un deuxième mode de réalisation du séparateur 10. Dans ce mode de réalisation, le tube de la première sortie 31 s'étend selon une longueur prédéterminée entre l'amont et l'aval de la chambre de séparation 30. Il est percé de trous ou fentes le long de cette longueur pour mieux extraire le gaz du volume central 37. Ladite longueur prédéterminée peut être comprise entre 0,25 % et 0,75 % de la distance entre la paroi amont 30a et la paroi aval 30b de la chambre de séparation 30. Un tel tube perforé de première sortie 31 peut être adapté à tous les modes de réalisation.

Grâce à cette disposition, la vitesse du gaz extrait par la première sortie 31 est réduite. Des risques d'entraînement par forces aérodynamiques du liquide situé à la surface d'interface 35 sont ainsi réduits.

La chambre d'extraction 50 comprend des éléments de guidage 51 du liquide adaptés pour réduire et sensiblement arrêter la rotation du liquide provenant de la chambre de séparation 30 avant d'être extrait vers la deuxième canalisation de sortie 13. Ces éléments de guidages représentés par des hachures en figure 5 sont par exemple des ailettes radiales par rapport à l'axe D, s'étendant dans la direction d'axe D, et intégrées dans le volume de la chambre d'extraction 50.

La chambre de contrôle 40 comprend également des éléments de guidage 41 du liquide adaptés à réduire et sensiblement arrêter la rotation du liquide provenant de la chambre de séparation 30 avant d'être extrait vers la troisième canalisation de sortie 14. Ces éléments de guidages 41 peuvent être similaires à ceux explicités pour la chambre d'extraction 50.

En outre, cette chambre de contrôle 40 peut comprendre une paroi interne 42 sous laquelle le liquide est extrait par la troisième canalisation de sortie 14.

Grâce à ces deux dernières dispositions, les risques d'entraînement de gaz par effet vortex sont réduits, voire sensiblement annulés, et la conduite 14 extrait principalement du liquide et non un mélange de liquide et de gaz.

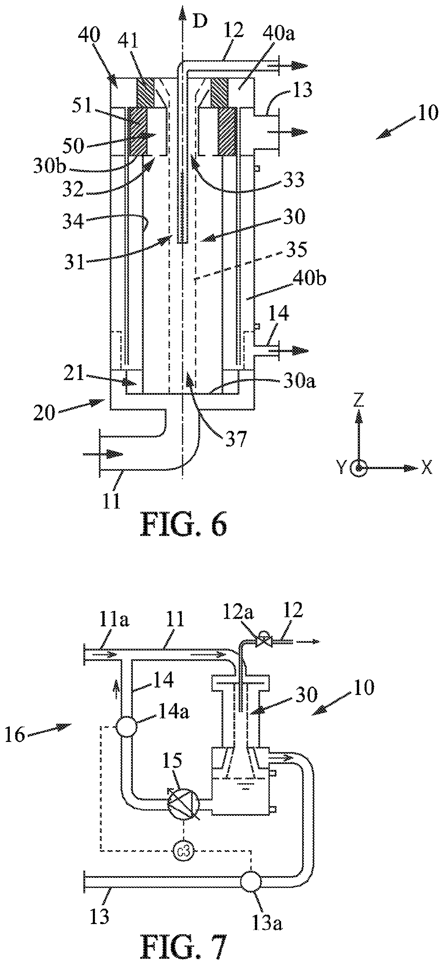

La **figure 6** montre un troisième mode de réalisation du séparateur 10. Dans ce mode de réalisation, l'écoulement s'effectue de bas en haut contrairement aux deux précédents modes de réalisation, et la chambre de contrôle 40 est placée autour de la chambre de séparation 30.

Toutes les sorties 31, 32, 33 de la chambre de séparation 30 sont situées en haut, et en aval de l'écoulement (dans la direction D).

La première sortie 31 est ici en aval et comprend un tube percé de trous selon une longueur prédéterminée entre l'aval et l'amont de la chambre de séparation 30.

La chambre de contrôle 40 comprend :

- une première partie 40a située en haut dans laquelle le volume central 37 de gaz pénètre et du liquide se déverse,
- une deuxième partie 40b annulaire située autour de la chambre de séparation 30, et
- des tubes 42 sensiblement verticaux et traversant la chambre d'extraction 50 pour amener par gravité le liquide ou mélange de la première partie 40a vers la deuxième partie 40b de la chambre de contrôle 40.

La troisième canalisation de sortie 14 extraits en bas de la deuxième partie 40b le liquide de cette chambre.

Sur la figure, des zones hachurées montrent des éléments de guidage pour réduire ou sensiblement arrêter la rotation du liquide dans les chambres de contrôle 40 et d'extraction 50.

La **figure 7** montre un quatrième mode de réalisation du séparateur 10. Dans ce mode de réalisation, le séparateur 10 comprend en outre :

- un premier capteur de débit 13a pour mesurer un premier débit de liquide dans la deuxième canalisation de sortie 13,
- un deuxième capteur de débit 14a pour mesurer un deuxième débit de liquide dans la canalisation de retour 14, et
- une unité de contrôle c3 qui pilote la pompe 15 située dans la canalisation de retour 14.

Notamment, l'unité de contrôle c3 peut piloter la vitesse de rotation de la pompe 15 par une loi de contrôle fonction des premier et deuxième débits mesurés.

Par exemple, la loi de contrôle peut être déterminée pour que la somme des premier et deuxième débits soit supérieure à un seuil minimum prédéterminé.

Grâce à ces dispositions, la vitesse d'injection du mélange dans la chambre de séparation 30 par le dispositif d'injection ou lanceur 20 peut être maintenue à une valeur suffisamment élevée, même lorsque le débit d'alimentation de la première portion 11a de la canalisation d'alimentation 11 diminue, de sorte que le régime cyclonique dans la chambre de séparation 30 est conservé et la séparation du mélange demeure efficace.

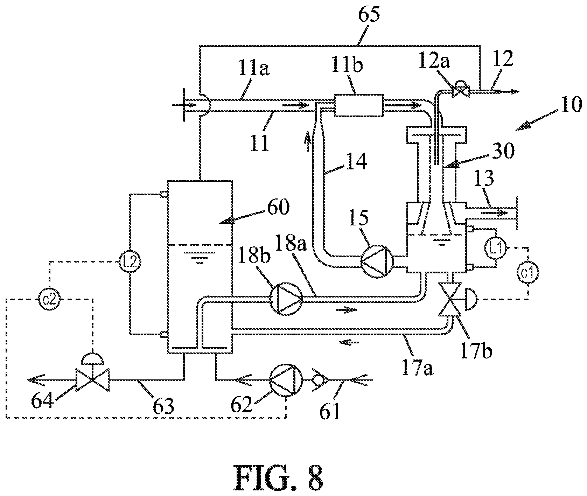

La **figure 8** montre un cinquième mode de réalisation du séparateur 10. Dans ce mode de réalisation, le séparateur 10 comprend en outre un réservoir 60 relié à la chambre de contrôle 40 par :

- une canalisation d'aller 17a comprenant éventuellement une vanne de contrôle 17b, pour extraire du mélange de la chambre de contrôle 40 vers le réservoir 60, et
- une canalisation de retour 18a comprenant une pompe 18b pour extraire du mélange du réservoir 60 vers la chambre de contrôle 40.

Grâce à ces dispositions, le volume de contrôle 42 de la chambre de contrôle 40 est augmenté, ce qui permet de traiter la séparation d'un mélange ayant une fraction volumique de gaz qui peut varier dans le temps dans des proportions beaucoup plus importantes. Le séparateur est alors encore plus tolérant aux variations et transitoires temporels de la fraction volumique de gaz dans le mélange.

En outre, le niveau de la surface supérieure 44 dans la chambre de contrôle 40 peut être maintenu constant, en réglant le débit dans la canalisation d'aller 17a par la vanne de contrôle 17b, et/ou en réglant le débit dans la canalisation de retour 18a par la pompe 18b.

La pression dans le réservoir 60 peut être imposée en le reliant par une canalisation 65 à la première canalisation de sortie 12 de gaz du séparateur. La pompe 18b et la vanne 17b sont alors soumises à une différence de pression constante.

Des variations du débit de mélange dans la canalisation d'alimentation 11 influencent uniquement le niveau de liquide dans le réservoir 60 et non le niveau de liquide dans la chambre de contrôle 40. Le circuit de retour 16 est toujours alimenté avec un niveau constant de liquide dans la chambre de contrôle 40.

Le séparateur 10 peut alors comprendre en outre :

- un capteur de chambre de contrôle L1 pour mesurer un niveau de liquide dans ladite chambre de contrôle 40, et
- une première unité de contrôle c1 qui ouvre ou ferme la vanne 17b et qui éventuellement pilote la pompe 18b en fonction du niveau de liquide mesuré dans la chambre de contrôle 40 par le capteur de chambre de contrôle L1.

La pompe 18b fonctionne par exemple à vitesse constante.

Le séparateur 10 peut également comprendre en outre :

- un capteur de réservoir L2 pour mesurer un niveau de mélange ou de liquide dans ledit réservoir 60, et
- une deuxième unité de contrôle c2 qui ouvre ou ferme une vanne 64 de rejet de mélange ou de liquide connectée au réservoir 60 par une canalisation 63 pour réduire le niveau de liquide dans le réservoir 60, et qui éventuellement actionne une pompe 62 d'alimentation connectée au réservoir 60 par une autre canalisation 61 pour alimenter ledit réservoir 60 et augmenter le niveau de liquide dans le réservoir 60.

Les unités de contrôle c1, c2 sont optionnelles et sont utilisables indépendamment l'une de l'autre, ou en combinaison. Elles peuvent avoir des temps de réponse assez long, de sorte que le système complet bouclé du séparateur 10 est également très stable avec une marge de stabilité importante.

Par exemple, la vanne de décharge 64 sera utilisée pour réduire le volume de liquide dans la boucle du séparateur 10, lorsque du liquide est accidentellement introduit dans cette boucle.

Réciproquement, l'alimentation en liquide du réservoir 60 par la pompe 62 sera utilisée pour augmenter le volume de liquide dans la boucle du séparateur 10, pour compenser des dérives lentes telles que la vaporisation de liquide, et l'entraînement de la vapeur avec le gaz dans la première canalisation de sortie 12, ou encore les pertes cumulées à long terme du fait d'un entraînement, même très faible, de liquide dans la première sortie 31.

Le fonctionnement du séparateur 10 est ainsi aisément contrôlable et stable, quel que soit les variations continues ou discontinues de la fraction volumique de gaz dans le mélange en entrée. Le réservoir 60 est un composant annexe, ajouté pour augmenter la stabilité sur des variations temporellement transitoires.

En outre, pour tous les modes de réalisation de l'invention un dispositif de mélange 11b peut être intégré dans la canalisation d'alimentation 11 au niveau de la réinjection de liquide de la canalisation de retour 14. Grâce au circuit de retour 16 et à ce dispositif de mélange 11b, le fonctionnement du séparateur 10 est moins sensible à des variations de fraction volumique de gaz, notamment en cas de variations transitoires amenant une grande quantité de gaz. Sans ce dispositif, la vitesse d'injection tangentielle du mélange par le lanceur 20 pourrait décroitre à un point tel que le régime cyclonique dans la chambre de séparation 30 pourrait être perturbé et le volume central 37 pourrait avoir des instabilités. Un tel dispositif de mélange 11b est alors utile pour supprimer de tels inconvénients dans le cas de l'utilisation dans une installation délivrant de trop fortes variations de fraction volumique de gaz dans le mélange.

En outre, les différentes réalisations et simulations du séparateur selon de l'invention ont montré que celui-ci avait un fonctionnement normal ou régime établi correspondant à un mélange contenant jusqu'à 40 % de gaz en volume. Les dimensions obtenues pour avoir un tel fonctionnement normal respectent à plus ou moins 30 % les conditions suivantes sur les diamètres :

$$D_5 = D_0/3,$$

$$D_3 = 1/2.D_0,$$

et

$$D_2 = (D_0 + D_3)/2.$$

Le séparateur 10 est adapté pour atteindre une grande performance en séparation et il est stable.

Il reste également stable sur une certaine durée en condition normale extrême, lorsque la fraction volumique de gaz contenue dans le mélange en entrée de la canalisation d'alimentation 11 (première portion 11a) devient nulle. Une telle condition extrême peut arriver exceptionnellement ou de manière répétitive. La surface d'interface 35 reste sensiblement stable, avec un diamètre sensiblement constant. Il ne délivre plus de gaz dans la première canalisation de sortie 12, et surtout il ne délivre pas de liquide dans cette sortie si ladite durée reste inférieure à une valeur limite, déterminée par exemple expérimentalement.

Ce séparateur permet de séparer une phase gazeuse finement dispersée dans une phase liquide pour une grande plage de fraction volumique de gaz dans le mélange, par exemple entre 0 % et 40 %.

Il a en outre pour avantage de ne générer qu'une faible perte en pression entre le mélange en entrée (dans la canalisation d'alimentation 11) et le gaz extrait en sortie (dans la première canalisation de sortie 12), ou le liquide en sortie (dans la deuxième canalisation 13).

Dans les divers modes de réalisation, on peut définir :

- une première pression P11 est la pression du mélange dans la canalisation d'alimentation 11,

- une deuxième pression P12 est la pression de gaz dans la première canalisation de sortie 12, et
- une troisième pression P13 est la pression de liquide séparé dans la deuxième canalisation de sortie 13.

On peut alors calculer un coefficient K par le rapport de la différence entre la première pression P11 et la deuxième pression P12, et de la différence entre la première pression et la troisième pression, c'est-à-dire :

$$K = \frac{P11 - P12}{P11 - P13}.$$

Les simulations et réalisations du séparateur selon l'invention ont ainsi montré que ce séparateur pouvait être utilisé selon un mode de fonctionnement normal ayant une séparation performante du mélange, pour des valeurs du coefficient K comprises entre 1 et 3, et de préférence comprises entre 1,5 et 2, avec un rapport $D_3/D_5$ du diamètre interne $D_3$ de la deuxième sortie sur le diamètre de la troisième sortie $D_5$ compris entre 1,1 et 2, et de préférence compris entre 1,2 et 1,5. Ce séparateur peut alors être avantageusement utilisé dans une installation de compression de gaz comprenant un dispositif éjecteur tel que cela est décrit dans la demande de brevet publiée FR-2 944 218. Dans ces installations, un séparateur gravitaire est habituellement utilisé. Les séparateurs gravitaires sont peu efficaces (qualité de séparation et débits) et encombrants.

Il peut en outre être utilisé dans de nombreuses installations industrielles.

**Revendications**

1. Séparateur d'un mélange de liquide et de gaz, comprenant un dispositif d'injection (20), une chambre de séparation (30) ayant une surface interne sensiblement cylindrique et s'étendant selon un axe longitudinal vertical, et une chambre de contrôle (40), dans lequel :

    - le dispositif d'injection (20) est alimenté par le mélange de liquide et de gaz, et injecte le mélange dans la chambre de séparation, de manière sensiblement tangentielle à la surface interne, de telle sorte que le mélange est séparé dans la chambre de séparation en du gaz situé dans un volume central et du liquide situé dans un volume annulaire autour du volume central, une surface d'interface séparant lesdits volumes central et annulaire,
    - la chambre de séparation (30) s'étend vers le bas entre une paroi amont (30a) à proximité du dispositif d'injection (20) et une paroi aval (30b) à l'opposé de la paroi amont (30a), et comprend une première sortie axiale pour extraire le gaz du volume central, une deuxième sortie à distance dudit axe pour extraire le liquide du volume annulaire, et une troisième sortie axiale en communication avec la chambre de contrôle, ladite troisième sortie située dans la paroi aval (30b) et ayant un diamètre ($D_5$) supérieur au diamètre de la première sortie ($D_4$) et inférieur à un diamètre interne ($D_3$) de la deuxième sortie,

- la chambre de contrôle (40) est dans le prolongement de la chambre de séparation et reçoit par la troisième sortie de la chambre de séparation une quantité de liquide qui s'écoule depuis la chambre de séparation pour former un volume de liquide (42) ayant une surface supérieure (44), et est reliée au dispositif d'injection par un circuit de retour (16) pour réinjecter une quantité de liquide de ladite chambre de contrôle vers le dispositif d'injection, et

- un moyen de régulation comprenant une pompe (15) et adapté pour réguler un niveau de la surface supérieure dans la chambre de contrôle en réinjectant la quantité de liquide par le circuit de retour vers le dispositif d'injection, et de telle sorte que ladite surface d'interface ait en condition normale de fonctionnement un diamètre ($D_c$) compris entre le diamètre de la première sortie ($D_4$) et le diamètre de la troisième sortie ($D_5$) pour que ladite surface d'interface pénètre dans la chambre de contrôle et que du liquide de la chambre de séparation s'écoule vers ladite chambre de contrôle.

2. Séparateur selon la revendication 1, dans lequel la première sortie (31) est formée d'un tube s'étendant le long de l'axe dans le volume central, ledit tube comprenant des ouvertures latérales pour extraire le gaz dudit volume central.

3. Séparateur selon la revendication 1 ou la revendication 2, dans lequel la deuxième sortie (32) est une ouverture annulaire ayant un diamètre externe ($D_2$) inférieur au diamètre ($D_0$) de la surface interne (34) de la chambre de séparation (30).

4. Séparateur selon l'une quelconque des revendications précédentes, dans lequel le volume de la chambre de contrôle (40) est inférieur au volume de la chambre de séparation (30), et de préférence compris entre 10 % et 50 % du volume de la chambre de séparation (30).

5. Séparateur selon l'une quelconque des revendications précédentes, dans lequel la chambre de contrôle (40) comprend au moins une partie annulaire (40b) de son volume située autour de la chambre de séparation.

**6.** Séparateur selon la revendication 5, dans lequel la chambre de contrôle comprend une première partie (40a) dans laquelle la surface d'interface (35) pénètre, une deuxième partie (40b) annulaire située en dessous de la première partie et autour de la chambre de séparation (30), et des tubes (42) reliant lesdites première et deuxième parties pour amener par gravité le liquide de la première partie vers la deuxième partie de la chambre de contrôle, ledit liquide étant extrait de cette deuxième partie (40b) de la chambre de contrôle (40) pour être réinjecté vers le dispositif d'injection (20).

**7.** Séparateur selon l'une quelconque des revendications précédentes, comprenant en outre un réservoir (60) relié à la chambre de contrôle (40) par une canalisation d'aller (17a) pour extraire du liquide de la chambre de contrôle vers ledit réservoir, et une canalisation de retour (18a) pour extraire du liquide du réservoir vers la chambre de contrôle.

**8.** Séparateur selon la revendication 7, dans lequel la chambre de contrôle comprend au moins un capteur de chambre de contrôle (L1) pour mesurer un niveau de liquide dans ladite chambre de contrôle, et comprend en outre une première unité de contrôle (c1) pilotant une pompe (18b) et une vanne (17b) situées dans les canalisations d'aller et de retour, ladite première unité de contrôle (c1) étant adaptée à contrôler ledit niveau de liquide dans la chambre de contrôle (40).

**9.** Séparateur selon la revendication 7 ou la revendication 8, dans lequel le réservoir (60) comprend au moins un capteur de réservoir (L2) pour mesurer un niveau de liquide dans ledit réservoir, et comprend en outre une deuxième unité de contrôle (c2) pilotant une pompe (62) pour alimenter le réservoir en liquide et une vanne (64) pour rejeter du liquide du réservoir, ladite deuxième unité de contrôle (c2) étant adaptée à contrôler ledit niveau de liquide dans le réservoir (60).

**10.** Séparateur selon l'une quelconque des revendications précédentes, dans lequel la chambre de contrôle (40) comprend des éléments de guidage (41) du liquide destinés à réduire une rotation autour de l'axe longitudinal du liquide provenant de la chambre de séparation (30).

**11.** Séparateur selon l'une quelconque des revendications précédentes, dans lequel la chambre de séparation (30) s'étend vers le bas entre une paroi amont (30a) à proximité du dispositif d'injection (20) et une paroi aval (30b) à l'opposé de la paroi amont (30a), et dans lequel la première sortie (31) est située dans la paroi amont, et les deuxième et troisième sorties (32, 33) sont situées dans la paroi aval (30b).

**12.** Séparateur selon l'une quelconque des revendications 1 à 10, dans lequel la chambre de séparation (30) s'étend vers le haut entre une paroi amont (30a) à proximité du dispositif d'injection (20) et une paroi aval (30b) à l'opposé de la paroi amont (30a), et dans lequel les première, deuxième et troisième sorties (31, 32, 33) sont situées dans la paroi aval (30b).

**Patentansprüche**

**1.** Abscheider zum Trennen eines Flüssigkeit/Gas-Gemisches, aufweisend eine Injektionsvorrichtung (20), eine Abscheidungskammer (30), die eine im Wesentlichen zylindrische Innenfläche hat und sich entlang einer vertikalen Längsachse erstreckt, und eine Kontrollkammer (40), in welchem:

- die Injektionsvorrichtung (20) mit dem Flüssigkeit/Gas-Gemisch beschickt wird und das Gemisch auf eine zur Innenfläche im Wesentlichen tangentiale Weise in die Abscheidungskammer injiziert, so dass das Gemisch in der Abscheidungskammer in Gas, das in einem zentralen Volumen angeordnet wird, und Flüssigkeit, die in einem um das zentrale Volumen herum ringförmigen Volumen angeordnet wird, geschieden wird, wobei eine Grenzfläche das zentrale Volumen und das ringförmige Volumen trennt,
- die Abscheidungskammer (30) sich zwischen einer stromaufwärtsseitigen Wand (30a) in der Nähe der Injektionsvorrichtung (20) und einer der stromaufwärtsseitigen Wand (30a) gegenüberliegenden stromabwärtsseitigen Wand (30b) nach unten erstreckt und einen ersten axialen Ausgang zum Extrahieren des Gases des zentralen Volumens, einen von der Achse beabstandeten zweiten Ausgang zum Extrahieren der Flüssigkeit des ringförmigen Volumens und einen mit der Kontrollkammer in Verbindung stehenden dritten axialen Ausgang aufweist, wobei der dritte Ausgang in der stromabwärtsseitigen Wand (30b) angeordnet ist und einen Durchmesser ($D_5$) hat, der größer als der Durchmesser des ersten Ausgangs ($D_4$) und kleiner als ein Innendurchmesser ($D_3$) des zweiten Ausgangs ist,
- die Kontrollkammer (40) in der Verlängerung der Abscheidungskammer ist und über den dritten Ausgang der Abscheidungskammer eine aus der Abscheidungskammer abfließende Flüssigkeitsmenge empfängt, um ein Flüssigkeitsvolumen (42) mit einer oberen Oberfläche (44) zu bilden, und über eine Rückleitung (16) mit der Injektionsvorrichtung verbunden ist, um eine Flüssigkeitsmenge der Kontrollkammer zurück zur Injektionsvorrichtung zu injizieren, und
- eine Steuereinrichtung, die eine Pumpe (15) aufweist und angepasst ist, um einen Pegel der oberen Oberfläche in der Kontrollkammer zu steuern, dadurch, dass die Flüssigkeitsmenge über die Rückleitung zurück zur Injektionsvorrichtung injiziert wird und derart, dass unter normalen Betriebsbedingungen die Grenzfläche einen Durchmesser ($D_C$) hat, der zwischen dem Durchmesser ($D_4$) des ersten Ausgangs und dem Durchmesser ($D_5$) des dritten Ausgangs ist, damit die Grenzfläche in die Kontrollkammer eindringt und die Flüssigkeit der Abscheidungskammer zur Kontrollkammer fließt.

2. Abscheider nach Anspruch 1, in welchem der erste Ausgang (31) aus einem Rohr gebildet ist, das sich in dem zentralen Volumen entlang der Achse erstreckt, wobei das Rohr seitliche Öffnungen aufweist, um Gas aus dem zentralen Volumen zu extrahieren.

3. Abscheider nach Anspruch 1 oder Anspruch 2, in welchem der zweite Ausgang (32) eine ringförmige Öffnung ist, die einen Außendurchmesser ($D_2$) hat, der kleiner als der Durchmesser ($D_0$) der Innenfläche der Abscheidungskammer (30) ist.

4. Abscheider nach einem der vorstehenden Ansprüche, in welchem das Volumen der Kontrollkammer (40) kleiner als das Volumen der Abscheidungskammer (30) ist und bevorzugt zwischen 10% und 50% des Volumens der Abscheidungskammer (30) ist.

5. Abscheider nach einem der vorstehenden Ansprüche, in welchem die Kontrollkammer (40) zumindest mit einem ringförmigen Teil (40b) seines Volumens um die Abscheidungskammer herum angeordnet ist.

6. Abscheider nach Anspruch 5, in welchem die Kontrollkammer einen ersten Teil (40a), in welchen die Grenzfläche (35) eindringt, einen unterhalb des ersten Teils und um die Abscheidungskammer (30) herum angeordneten zweiten ringförmigen Teil (40b) und den ersten und den zweiten Teil verbindende Rohre (42) aufweist, um die Flüssigkeit des ersten Teils durch Schwerkraft zu dem zweiten Teil der Kontrollkammer zu bringen, wobei die Flüssigkeit aus diesem zweiten Teil (40b) der Kontrollkammer (40) extrahiert wird, um zurück zur Injektionsvorrichtung (20) injiziert zu werden.

7. Abscheider nach einem der vorstehenden Ansprüche, aufweisend ferner einen Tank (60), der mit der Kontrollkammer (40) verbunden ist und zwar über eine Vorlaufleitung (17a), um Flüssigkeit aus der Kontrollkammer zu dem Tank zu extrahieren, und über eine Rücklaufleitung (18a), um Flüssigkeit aus dem Tank zur Kontrollkammer zu extrahieren.

8. Abscheider nach Anspruch 7, in welchem die Kontrollkammer mindestens einen Kontrollkammer-Sensor (L1) zum Messen eines Flüssigkeitspegels in der Kontrollkammer aufweist und ferner eine erste Steuereinheit (c1) aufweist, die eine Pumpe (18b) und ein Ventil (17b) steuert, die in der Vorlauf- und Rücklaufleitung angeordnet sind, wobei die erste Steuereinheit (c1) angepasst ist, um den Flüssigkeitspegel in der Kontrollkammer (40) zu steuern.

9. Abscheider nach Anspruch 7 oder Anspruch 8, in welchem der Tank (60) mindestens einen Tank-Sensor (L2) aufweist, um einen Flüssigkeitspegel in dem Tank zu messen, und ferner eine zweite Steuereinheit (c2) aufweist, die eine Pumpe (62) steuert, um den Tank mit Flüssigkeit zu beschicken, und ein Ventil (64) aufweist, um Flüssigkeit aus dem Tank abfließen zu lassen, wobei die zweite Steuereinheit (c2) angepasst ist, um den Flüssigkeitspegel in dem Tank (60) zu steuern.

10. Abscheider nach einem der vorstehenden Ansprüche, in welchem die Kontrollkammer (40) Führungselemente (41) zum Führen der Flüssigkeit aufweist, die angepasst sind, um eine um die Längsachse gerichtete Drehung der aus der Abscheidungskammer (30) kommenden Flüssigkeit zu reduzieren.

11. Abscheider nach einem der vorstehenden Ansprüche, in welchem die Abscheidungskammer (30) sich zwischen einer stromaufwärtsseitigen Wand (30a) in der Nähe der Injektionsvorrichtung (20) und einer der stromaufwärtsseitigen Wand (30a) gegenüberliegenden stromabwärtsseitigen Wand (30b) nach unten erstreckt und in welchem der erste Ausgang (31) in der stromaufwärtsseitigen Wand angeordnet ist und der zweite und dritte Ausgang (32, 33) in der stromabwärtsseitigen Wand (30b) angeordnet sind.

12. Abscheider nach einem der Ansprüche 1 bis 10, in welchem die Abscheidungskammer (30) sich zwischen einer stromaufwärtsseitigen Wand (30a) in der Nähe der Injektionsvorrichtung (20) und einer der stromaufwärtsseitigen Wand (30a) gegenüberliegenden stromabwärtsseitigen Wand (30b) nach oben erstreckt und in welchem der erste, zweite und dritte Ausgang (31, 32, 33) in der stromabwärtsseitigen Wand (30b) angeordnet sind.

**Claims**

1. Separator of a mixture of liquid and gas, comprising an injection device (20), a separation chamber (30) having a substantially cylindrical internal surface and extending along a vertical longitudinal axis, and a control chamber (40), in which:

- the injection device (20) is fed by the mixture of liquid and gas, and injects the mixture into the separation chamber, in a manner that is substantially tangential to the internal surface, such that the mixture is separated in the separation chamber into gas situated in a central volume and liquid situated in an annular volume around the central volume, an interface surface separating the said central and annular volumes,

- the separation chamber (30) extends downwards between an upstream wall (30a) close to the injection device (20) and a downstream wall (30b) opposite to the upstream wall (30a), and comprises a first axial outlet for extracting the gas from the central volume, a second outlet at a distance from the said axis for extracting the liquid from the annular volume, and a third axial outlet in communication with the control chamber, the said third outlet located in the downstream wall (30b) and having a diameter ($D_5$) greater than the diameter of the first outlet ($D_4$) and smaller than an internal diameter ($D_3$) of the second outlet,

- the control chamber (40) is in the extension of the separation chamber and receives through the third outlet of the separation chamber a quantity of liquid which flows from the separation chamber to form a volume of liquid (42) having an upper surface (44), and is connected to the injection device by a return circuit (16) to reinject a quantity of liquid from the said control chamber to the injection device, and

- a regulation means comprising a pump (15) and suitable for regulating a level of the upper surface in the control chamber by reinjecting the quantity of liquid through the return circuit to the injection device, and such that the said interface surface has, in normal operating conditions, a diameter ($D_c$) lying between the diameter of the first outlet ($D_4$) and the diameter of the third outlet ($D_5$) so that the said interface surface enters the control chamber and the liquid from the separation chamber flows to the said control chamber.

2. Separator according to Claim 1, in which the first outlet (31) is formed of a tube extending along the axis in the central volume, the said tube comprising lateral openings for extracting the gas from the said central volume.

3. Separator according to Claim 1 or Claim 2, in which the second outlet (32) is an annular opening having an external diameter ($D_2$) smaller than the diameter ($D_0$) of the internal surface (34) of the separation chamber (30).

4. Separator according to any one of the preceding claims, in which the volume of the control chamber (40) is smaller than the volume of the separation chamber (30), and preferably between 10% and 50% of the volume of the separation chamber (30).

5. Separator according to any one of the preceding claims, in which the control chamber (40) comprises at least one annular portion (40b) of its volume situated around the separation chamber.

6. Separator according to Claim 5, in which the control chamber comprises a first portion (40a) into which the interface surface (35) penetrates, a second annular portion (40b) situated beneath the first portion and around the separation chamber (30), and tubes (42) connecting the said first and second portions in order to convey by gravity the liquid from the first portion to the second portion of the control chamber, the said liquid being extracted from this second portion (40b) of the control chamber (40) to be reinjected to the injection device (20).

7. Separator according to any one of the preceding claims, also comprising a tank (60) connected to the control chamber (40) by an outgoing pipe (17a) for extracting liquid from the control chamber to the said tank, and a return pipe (18a) for extracting liquid from the tank to the control chamber.

8. Separator according to Claim 7, in which the control chamber comprises at least one control chamber sensor (L1) for measuring a liquid level in the said control chamber and also comprises a first control unit (c1) controlling a pump (18b) and a valve (17b) situated in the outgoing and return pipes, the said first control unit (c1) being suitable for controlling the said liquid level in the control chamber (40).

9. Separator according to Claim 7 or Claim 8, in which the tank (60) comprises at least one tank sensor (L2) for measuring a liquid level in the said tank, and also comprises a second control unit (c2) controlling a pump (62) for feeding the tank with liquid and a valve (64) for discharging liquid from the reservoir, the said second control unit (c2) being suitable for controlling the said liquid level in the tank (60).

10. Separator according to any one of the preceding claims, in which the control chamber (40) comprises guiding elements (41) for guiding the liquid that are designed to reduce a rotation about the longitudinal axis of the liquid originating from the separation chamber (30).

11. Separator according to any one of the preceding claims, in which the separation chamber (30) extends downwards between an upstream wall (30a) close to the injection device (20) and a downstream wall (30b) opposite to the upstream wall (30a), and in which the first outlet (31) is situated in the upstream wall, and the second and third outlets (32, 33) are situated in the downstream wall (30b) .

12. Separator according to any one of Claims 1 to 10, in which the separation chamber (30) extends upwards between an upstream wall (30a) close to the injection device (20) and a downstream wall (30b) opposite to the upstream wall (30a), and in which the first, second and third outlets (31, 32, 33) are situated in the downstream wall (30b).

## FIG. 1

## FIG. 2

## FIG. 3

**FIG. 4**

**FIG. 5**

FIG. 6

FIG. 7

FIG. 8

## RÉFÉRENCES CITÉES DANS LA DESCRIPTION

**Documents brevets cités dans la description**

- WO 0100296 A
- GB 2439528 A
- US 3807142 A
- FR 2944218